# EUROPEAN PATENT APPLICATION

(11) **EP 4 571 971 A2**
(43) Date of publication of application: **18.06.2025**
(21) Application number: 24206735.3
(22) Date of filing: 15.10.2024
(51) Int. Cl.: H01M 50/209, H01M 50/271, H01M 50/358, H01M 50/507

(54) **PRESSURE RELIEF BRACKET ASSEMBLY AND BATTERY MODULE**

(30) Priority: 13.12.2023 CN 202323404386 U
(71) Applicant: Eve Energy Co., Ltd., Huizhou, Guangdong 516006 (CN)
(72) Inventor: NIU, Jiaxin, Huizhou, Guangdong, 516006 (CN)
(74) Representative: Herrero & Asociados, S.L.

(57) **Abstract**

A pressure relief bracket assembly (10b) and a battery module (10) are provided. The pressure relief bracket assembly (10b) includes a pressure relief bracket (11) and a protective cover (12). One side of the pressure relief bracket (11) is formed with a plurality of receiving grooves (102) and a plurality of pressure relief ports (103). The receiving grooves (102) are configured to install busbars (13). The protective cover (12) is formed with a substance channel (104). The protective cover (12) covers on the pressure relief ports (103), making the substance channel (104) in communication with the pressure relief ports (103), as well as making the protective cover (12) isolate the pressure relief ports (103) from the receiving grooves (102). Thermal substances sprayed from the pressure relief ports (103) are discharged into the substance channel (104).

## Description

### TECHNICAL FIELD

The present disclosure relates to the technology field of batteries, and in particular, to a pressure relief bracket assembly and a battery module.

### BACKGROUND

With the rapid development of new energy technologies, battery modules have been widely used in various new energy vehicles and energy storage power stations. The battery module usually includes a plurality of battery cells, which are electrically coupled via a busbar mounted on a cell connection system (CCS) bracket. During the use of the battery module, if phenomena such as short circuits and overshoot occur, a large amount of heat will be accumulated inside the battery cells, resulting in thermal runaway, which may cause an excessively high internal pressure in the battery cells, leading to a fire or even explosion.

In related technologies, the CCS bracket is generally provided with pressure relief ports to release the pressure generated by thermal runaway. However, in this manner, thermal substances, such as electrolyte, sprayed out from the pressure relief port may fall on the busbar, leading to the spread of thermal runaway in the battery module, causing explosions and causing potential safety hazards.

### SUMMARY

In a first aspect, the present disclosure provides a pressure relief bracket assembly. The pressure relief bracket assembly includes a pressure relief bracket and a protective cover. One side of the pressure relief bracketis formed with a plurality of receiving grooves and a plurality of pressure relief ports. The receiving grooves are configured to install busbars. The protective cover is formed with a substance channel, where the protective cover covers on the pressure relief ports, making the substance channel in communication with the pressure relief port, as well as making the protective cover isolate the pressure relief ports from the receiving grooves.

In a second aspect, the present disclosure provides a battery module. The battery module includes a plurality of battery cells and the pressure relief bracket assembly described above. The receiving grooves are provided with the busbars, which are electrically coupled to the plurality of battery cells.

The beneficial effects of the pressure relief bracket assembly and the battery module provided in the present disclosure are that: the pressure relief bracket assembly includes a pressure relief bracket and a protective cover. One side of the pressure relief bracket is formed with a plurality of receiving grooves and a plurality of pressure relief ports. The receiving grooves are configured to install the busbars. The protective cover is formed with a substance channel, where the protective cover covers on the pressure relief ports, making the substance channel in communication with the pressure relief port, as well as making the protective cover isolate the pressure relief ports from the receiving grooves. Therefore, when the battery cells experience thermal runaway, the pressure generated by the thermal runaway is released through the pressure relief ports. At the same time, the thermal substances sprayed from the pressure relief ports are discharged into the substance channel. Due to the isolation effect of the protective cover on the pressure relief ports and the receiving grooves, the thermal substances sprayed from the pressure relief ports are prevented from dispersing onto the busbars, thereby avoiding spread of thermal runaway and explosion of the battery module, and reducing potential safety hazards.

### BRIEF DESCRIPTION OF THE DRAWINGS

FIG. 1 is a perspective structural schematic diagram of a battery module according to some embodiments.
FIG. 2 is an exploded structural schematic diagram of the battery module in FIG. 1.
FIG. 3 is a schematic cross-sectional view of the battery module in FIG. 1 taken in an F-F direction.
FIG. 4 is a perspective structural schematic diagram of a pressure relief bracket assembly in FIG. 2.
FIG. 5 is an exploded structural schematic diagram of the pressure relief bracket assembly in FIG. 4.
FIG 6 is a schematic cross-sectional view of the pressure relief bracket assembly in FIG. 3.
FIG. 7 is a schematic cross-sectional view of a shell of FIG. 3.

### DETAILED DESCRIPTION

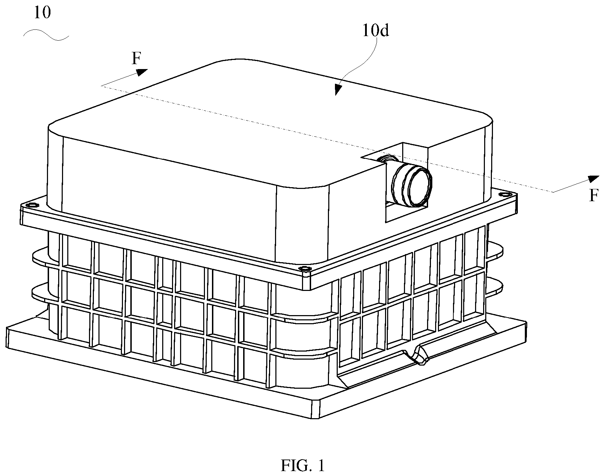

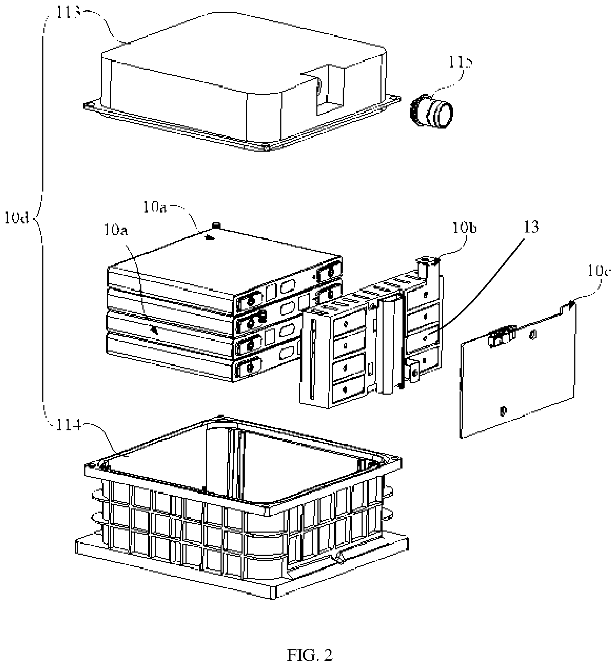

Please refer to FIG. 1 and FIG. 2 together. FIG. 1 is a perspective structural schematic diagram of a battery module 10 according to some embodiments of the present disclosure. FIG. 2 is an exploded structural schematic diagram of the battery module 10 in FIG. 1. The battery module 10 in this embodiment includes a plurality of battery cells 10a, a plurality of busbars 13, and a pressure relief bracket assembly 10b.

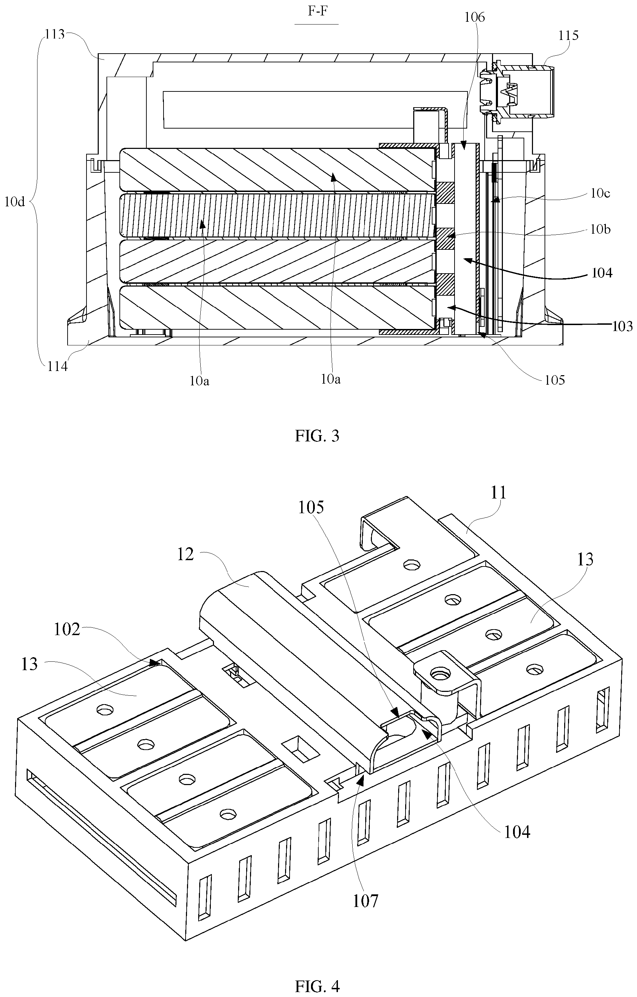

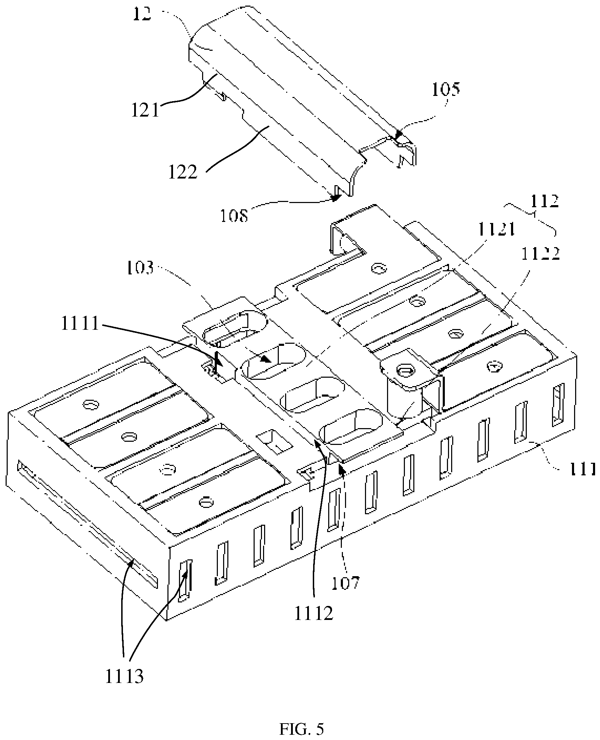

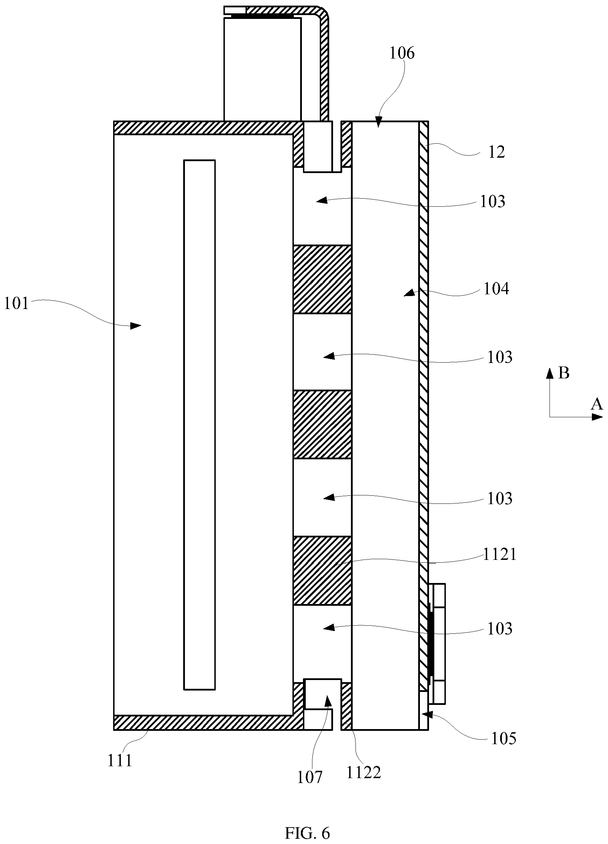

Referring to FIGs. 3 to 6 together. FIG. 3 is a schematic cross-sectional view of the battery module 10 in FIG. 1 taken in an F-F direction, FIG. 4 is a perspective structural schematic diagram of the pressure relief bracket assembly 10b in FIG. 2, FIG. 5 is an exploded structural schematic diagram of the pressure relief bracket assembly 10b in FIG. 4, and FIG. 6 is a schematic cross-sectional view of the pressure relief bracket assembly 10b in FIG. 3. The pressure relief bracket assembly 10b includes a pressure relief bracket 11 and a protective cover 12.

One side of the pressure relief bracket 11 facing a first direction A is formed with a plurality of receiving grooves 102 and a plurality of pressure relief ports 103. The receiving grooves 102 are configured to install the busbars 13. The busbars 13 installed in the plurality of receiving grooves 102 are electrically coupled to the plurality of battery cells 10a respectively. It can be understood that the amount of the receiving grooves 102 and the busbars 13 can be set according to actual needs, which is not limited.

The protective cover 12 is formed with a substance channel 104. The protective cover 12 covers on the pressure relief ports 103, making the substance channel 104 in communication with the pressure relief ports 103, as well as making the protective cover 12 isolate the pressure relief ports 103 from the receiving grooves 102. Therefore, when the battery cells 10a experience thermal runaway, the pressure generated by the thermal runaway is released through the pressure relief ports 103. At the same time, the thermal substances sprayed from the pressure relief ports 103 are discharged into the substance channel 104. Due to the isolation effect of the protective cover 12 on the pressure relief ports 103 and the receiving grooves 102, the thermal substances sprayed from the pressure relief ports 103 are prevented from dispersing onto the busbars 13, thereby avoiding spread of thermal runaway and explosion of the battery module, and reducing potential safety hazards.

The substance channel 104 extends in a second direction B, which is intersects with the first direction A. In the present embodiment, the second direction B is perpendicular to the first direction A. An end portion of the protective cover 12 in the second direction B, that is, an extending direction of the substance channel104, is further formed with a substance discharge outlet 105 that is in communication with the substance channel 104, so that the thermal substances discharged from the pressure relief ports 103 to the substance channel 104 are discharged through the substance discharge outlet 105, preventing thermal substances from accumulating in the substance channel 104. The substance discharge outlet 105 is formed on one side of the protective cover 12 away from the pressure relief bracket 11.

The protective cover 12 is further formed with an exhaust port 106 that is in communication with the substance channel 104. The exhaust port 106 is formed at an end of the protective cover 12 opposite to the substance discharge outlet 105, so that when thermal runaway occurs in the battery cells 10a, high-temperature gas generated by the thermal runaway is discharged from the pressure relief ports 103 to the substance channel 104, and then is discharged through the exhaust port 106. That is, the protective cover 12 in this embodiment can not only discharge the thermal substances through the substance discharge outlet 105 provided at one end of the protective cover 12, but also discharge the high-temperature gas through the exhaust port 106 provided at the other end of the protective cover 12. In practical applications, the battery module 10 is placed as shown in FIG. 3. In this placement state, the substance discharge outlet 105 is located at a bottom of the protective cover 12, and the exhaust port 106 is located at a top of the protective cover 12. When thermal runaway occurs in the battery cells 10a, the thermal substances, such as electrolyte, sprayed from the pressure relief ports 103 to the substance channel 104 will flow, due to gravity, along the substance channel 104 towards the substance discharge outlet 105 at the bottom, while the high-temperature gas discharged from the pressure relief ports 103 to the substance channel 104 will flow along the substance channel 104 towards the exhaust port 106 at the top.

In the present embodiment, the pressure relief bracket 11 is further formed with a wire harness passage 107, and the protective cover 12 is further formed with a wire harness notch 108 that is in communication with the wire harness passage 107, so that collection wire harnesses connected to the busbars 13 are sequentially led out through the wire harness notch 108 and the wire harness passage 107.

The pressure relief bracket 11 includes a bracket body 111 and a pressure relief body 112. The bracket body 111 is formed with the receiving grooves 102. The pressure relief body 112 includes a pressure relief portion 1121 and a partition portion 1122. The pressure relief portion 1121 is connected with the bracket body 111 and is formed with the pressure relief ports 103. The partition portion 1122 is connected with the pressure relief portion 1121, and is spaced apart from the bracket body 111 to form the wire harness passage 107. The protective cover 12 covers on the pressure relief portion 1121 and the partition portion 1122, making the wire harness notch 108 in communication with the wire harness passage 107. With this arrangement, on the one hand, the collection wire harnesses are sequentially led out through the harness notch 108 and the harnesses channels 107, and on the other hand, the collection wire harnesses are separated from the substance channel 104 by the partition portion 1122, so as to avoid damage to the collection wire harnesses caused by the thermal substances.

Referring to FIG. 5 again, in this embodiment, the protective cover 12 is detachably mounted on the pressure relief bracket 11. For example, the protective cover 12 is provided with a connecting hook 121, and the bracket body 111 is further provided with a connecting groove 1111 corresponding to the connecting hook 121. The protective cover 12 is mounted on the pressure relief bracket 11 by an engagement of the connecting hook 121 and the connecting groove 1111.

In this embodiment, the protective cover 12 is further provided with an extending portion 122, and the bracket body 111 is further provided with an inserting slot 1112 corresponding to the extending portion 122 and configured to receive the extending portion 122 of the protective cover 12, so as to improve the stability of the connection between the protective cover 12 and the pressure relief bracket 11.

In this embodiment, at least one side of the bracket body 111 is formed with a plurality of through holes 1113. The through holes 1113 are configured to allow glue to be injected into the pressure relief bracket 11 after assembling the plurality of battery cells 10a with the pressure relief bracket 11, thereby achieving bonding between the battery cells 10a and the pressure relief bracket 11.

Referring to FIG. 2 and FIG. 3 again, the battery module 10 in this embodiment further includes a battery management unit 10c. The battery management unit 10c is electrically coupled to the busbars 13. In this embodiment, the battery management unit 10c is electrically coupled to the busbars 13 through the described collection wire harnesses.

The battery management unit 10c is arranged on one side of the protective cover 12 away from the pressure relief bracket 11. By means of this arrangement, the protective cover 12 isolates the battery management unit 10c from the pressure relief ports 103, preventing the thermal substances sprayed from the pressure relief ports 103 from dispersing onto the battery management unit 10c, thereby avoiding the spread of the thermal runaway and explosion of the battery module 10, and reducing potential safety hazards.

The battery management unit 10c is arranged on one side of the protective cover 12 away from the pressure relief bracket 11, and as described above, the substance discharge outlet 105 is arranged at the end portion of the protective cover 12 in the second direction B, so that during the process of the thermal substances being sprayed from the pressure discharge ports 103, the thermal substances are blocked by the protective cover 12, and will not be directly sprayed onto the battery management unit 10c through the substance discharge outlet 105.

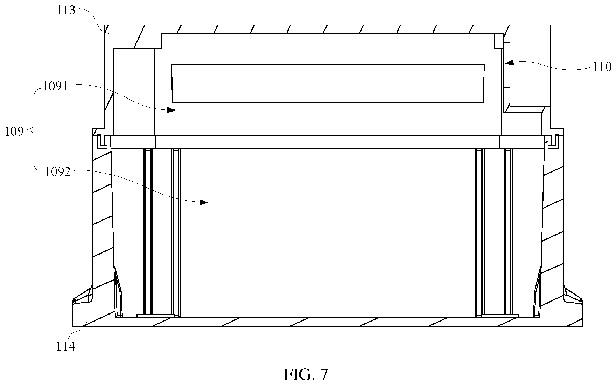

Referring to FIGs. 1 to 3 and 7 again. FIG. 7 is a schematic cross-sectional view of a shell 10d in FIG. 3. The battery module 10 in this embodiment further includes a shell 10d, which is formed with an accommodating space 109 and a ventilation hole 110 in communication with the accommodating space 109. The pressure relief bracket assembly 10b is arranged in the accommodating space 109. The ventilation hole 110 is mounted with an explosion-proof valve 115, so that when thermal runaway occurs in the battery cells 10a, the high-temperature gas generated by the thermal runaway is discharged into the accommodating space 109 via the exhaust port 106, and then discharged when the explosion-proof valve 115 is opened.

The shell 10d includes an upper shell 113 and a lower shell 114. The upper shell 113 is formed with a first sub-space 1091, the lower shell 114 is formed with a second sub-space 1092, and the first sub-space 1091 and the second sub-space 1092 cooperate to form the accommodating space 109. The ventilation hole 110 is formed in the upper shell 113 and is in communication with the first sub-space 1091. The pressure relief bracket assembly 10b is arranged in the second sub-space 1092.

In the present disclosure, the pressure relief bracket assembly 10b includes a pressure relief bracket 11 and a protective cover 12. One side of the pressure relief bracket 11 is formed with a plurality of receiving grooves 102 and a plurality of pressure relief ports 103. The receiving grooves 102 are configured to install the busbars 13. The protective cover 12 is formed with a substance channel 104, where the protective cover 12 covers on the pressure relief ports 103, making the substance channel 104 in communication with the pressure relief port 103, as well as making the protective cover 12 isolate the pressure relief ports 103 from the receiving grooves 102. Therefore, when the battery cells 10a experience thermal runaway, the pressure generated by the thermal runaway is released through the pressure relief ports 103. At the same time, the thermal substances sprayed from the pressure relief ports 103 are discharged into the substance channel 104. Due to the isolation effect of the protective cover 12 on the pressure relief ports 103 and the receiving grooves 102, the thermal substances sprayed from the pressure relief ports 103 are prevented from dispersing onto the busbars 13, thereby avoiding spread of thermal runaway and explosion of the battery module 10, and reducing potential safety hazards.

## Claims

1. A pressure relief bracket assembly (10b), comprising:
a pressure relief bracket (11), wherein one side of the pressure relief bracket (11) is formed with a plurality of receiving grooves (102) and a plurality of pressure relief ports (103); wherein the receiving grooves (102) are configured to install busbars (13);
a protective cover (12) formed with a substance channel (104), wherein the protective cover (12) covers on the pressure relief ports (103), making the substance channel (104) in communication with the pressure relief ports (103), as well as making the protective cover (12) isolate the pressure relief ports (103) from the receiving grooves (102).

2. The pressure relief bracket assembly (10b) according to claim 1, wherein an end portion of the protective cover (12) in an extending direction of the substance channel (104) is provided with a substance discharge outlet (105) that is in communication with the substance channel (104).

3. The pressure relief bracket assembly (10b) according to claim 2, wherein the substance discharge outlet (105) is formed on one side of the protective cover (12) away from the pressure relief bracket (11).

4. The pressure relief bracket assembly (10b) according to claim 2, wherein the protective cover (12) is further formed with an exhaust port (106) that is in communication with the substance channel (104); wherein the exhaust port (106) is formed at an end of the protective cover (12) opposite to the substance discharge outlet (105).

5. The pressure relief bracket assembly (10b) according to claim 1, wherein the pressure relief bracket (11) is further provided with a wire harness passage (107), and the protective cover (12) is further provided with a wire harness notch (108) that is in communication with the wire harness passage (107).

6. The pressure relief bracket assembly (10b) according to claim 5, wherein the pressure relief bracket (11) comprises a bracket body (111) and a pressure relief body (112); wherein the bracket body (111) is formed with the receiving grooves (102); the pressure relief body (112) comprises a pressure relief portion (1121) and a partition portion (1122); wherein the pressure relief portion (1121) is connected to the bracket body (111) and is formed with the pressure relief ports (103); the partition portion (1122) is connected with the pressure relief portion (1121), and is spaced apart from the bracket body (111) to form the wire harness passage (107); the protective cover (12) covers on the pressure relief portion (1121) and the partition portion (1122), making the wire harness notch (108) in communication with the wire harness passage (107).

7. The pressure relief bracket assembly (10b) according to claim 1, wherein the protective cover (12) is detachably mounted on the pressure relief bracket (11).

8. The pressure relief bracket assembly (10b) according to claim 7, wherein the pressure relief bracket (11) comprises a bracket body (111), wherein the protective cover (12) is provided with a connecting hook (121), and the bracket body (111) is provided with a connecting groove (1111) corresponding to the connecting hook (121); wherein the protective cover (12) is mounted on the pressure relief bracket (11) by an engagement of the connecting hook (121) and the connecting groove (1111).

9. The pressure relief bracket assembly (10b) according to claim 8, wherein the protective cover (12) is further provided with an extending portion (122), and the bracket body (111) is further provided with an inserting slot (1112) corresponding to the extending portion (122) and configured to receive the extending portion (122) of the protective cover (12).

10. The pressure relief bracket assembly (10b) according to claim 1, wherein at least one side of the bracket body (111) is formed with a plurality of through holes (1113), wherein the through holes (1113) are configured to allow glue to be injected into the pressure relief bracket (11) after assembling a plurality of battery cells with the pressure relief bracket (11), thereby achieving bonding between the battery cells and the pressure relief bracket (11).

11. A battery module (10) comprising a plurality of battery cells (10a), a plurality of busbars (13), and the pressure relief bracket assembly (10b) according to any one of claims 1 to 9, wherein the receiving grooves (102) are provided with the busbars (13), and the busbars (13) installed in the plurality of receiving grooves (102) are electrically coupled to the plurality of battery cells (10a) respectively.

12. The battery module (10) according to claim 11, further comprising a battery management unit (10c), wherein the battery management unit (10c) is electrically coupled to the busbars (13) and is arranged on one side of the protective cover (12) away from the pressure relief bracket (11).

13. The battery module (10) according to claim 11, further comprising a shell (10d), wherein the shell (10d) is formed with an accommodating space (109) and a ventilation hole (110) in communication with the accommodating space (109); the pressure relief bracket assembly (10b) is arranged in the accommodating space (109); and the ventilation hole (110) is mounted with an explosion-proof valve (115).

14. The battery module (10) according to claim 13, wherein the shell (10d) comprises an upper shell (113) and a lower shell (114); the upper shell (113) is formed with a first sub-space (1091), the lower shell (114) is formed with a second sub-space (1092), and the first sub-space (1091) and the second sub-space (1092) cooperate to form the accommodating space (109); the ventilation hole (110) is formed in the upper shell (113) and is in communication with the first sub-space (1091); the pressure relief bracket assembly (10b) is arranged in the second sub-space (1092).

15. The battery module (10) according to claim 11, wherein at least one side of the bracket body (111) is formed with a plurality of through holes (1113), wherein the through holes (1113) are configured to allow glue to be injected into the pressure relief bracket (11) after assembling a plurality of battery cells (10a) with the pressure relief bracket (11), thereby achieving bonding between the battery cells (10a) and the pressure relief bracket (11).
